# EUROPÄISCHE PATENTANMELDUNG

(11) **EP 1 712 535 A1**
(43) Veröffentlichungstag der Anmeldung: **18.10.2006**
(21) Anmeldenummer: 06001782.9
(22) Anmeldetag: 28.01.2006
(51) Int. Cl.: C05F 11/00, A01G 31/00

(54) **Präparat zur pH-Wert-Regulierung des Bodens in Kombination mit einer Erhöhung der Bodenfruchtbarkeit**

(30) Priorität: 12.04.2005 DE 102005017043
(71) Anmelder: Tilco Biochemie GmbH, 23868 Reinfeld (DE)
(72) Erfinder: Scharafat, Iradj, 23843 Travenbrück-Tralau (DE)
(74) Vertreter: Klickow, Hans-Henning

(57) **Zusammenfassung**

Das Präparat dient zur Regulierung des pH-Wertes im Boden in Kombination mit einer Erhöhung der Bodenfruchtbarkeit. Das Präparat weist mindestens eine erste Komponente und eine zur ersten Komponente unterschiedliche zweite Komponente auf. Die zweite Komponente ist als eine Verbindung aus der Gruppe von Phosphor, Schwefel, Kalium, Stickstoff, Calzium, Magnesium in Säure, Lauge oder Salze realisiert. Die erste Komponente enthält organische Verbindungen, die aus aufgeschlossenem oder nicht aufgeschlossenem Algenmehl, Algenextrakten oder Pasten bestehen. Es ist eine Verwendung für mindestens eines der Gebiete der pH-Regulierung, Filzbeseitigung oder Verbesserung der Bodenfruchtbarkeit (Nährstoffversorgung, -schutz vor Auswaschung und Fixierung, Luft- und Wasserversorgung) vorgesehen. In der organischen Komponente sind als Algenmaterial Braunalgen und/oder Rotalgen enthalten.

## Beschreibung

Die Erfindung betrifft ein Präparat zur pH-Wert-Regulierung des Bodens im Kombination mit einer Erhöhung der Bodenfruchtbarkeit, das mindestens eine erste Komponente und eine zur ersten Komponente unterschiedliche zweite Komponente enthält und bei dem die zweite Komponente als eine Verbindung aus der Gruppe von Phosphor, Schwefel, Kalium, Stickstoff, Kalzium, Magnesium in Säure, Lauge oder Salze realisiert ist, sowie bei dem die erste Komponente organische Verbindungen enthält, die aus aufgeschlossenem oder nicht aufgeschlossenem Algenmehl, Algenextrakten oder Pasten bestehen.

Die Erfindung betrifft insbesondere auch ein Präparat zur Erhöhung der Bodenfruchtbarkeit (Verbesserung des Wasser-Haushalts, Lufthaushalts, Nährstoffhaushalts) mit Regulierung des pH-Wertes des Bodens, das mindestens mit einer ersten Komponente und einer zur ersten Komponente unterschiedlichen zweiten Komponente versehen ist und bei dem sich die zweite Komponente als eine Verbindung aus der Gruppe der Phosphate, der Polyphosphate, der Phosphite, der Phosphonate, der Polyphosphorsäure, der Salze der Polyphosphorsäure, der phosphorigen Säuren, der Phosphorsäure sowie der Salze der Phosphorigen Säuren und/oder Phosphorsäure, Stickstoffsalze der Ammonium, Nitrite, Nitrate, Amide, Amine, Harnstoffverbindungen, Methylurea und Ammoniak, Ammoniumlauge, Salpetersäure und deren Salze, Kalium, Kaliumsalze, Kaliumoxid, Kaliumhydroxid, Kaliumsalze, Kaliumnitrat, Kaliumsulfat, Kaliumchlorid, Kalium- Magnesium-Salze, Magnesiumsalze, Magnesiumsulfat, Magnesiumnitrat, Magnesiumcarbonat, Magnesium und Kalziumcarbonat, Eisensulfat zwei- und dreiwertig, Eisenchlorid, Eisennitrat, Eisencarbonat, realisiert ist, sowie bei dem die erste Komponente organische Verbindungen enthält, die mindestens zu einem Teil aus mindestens einer Aminosäure sowie zu einem Teil aus mindestens einem Algenmehl, nicht aufgeschlossenem und/oder aufgeschlossenem Algenmehl (mit Natriumoxid, - hydroxid, Carbonate oder und andere Salze oder Kaliumoxid,-hydroxid, -carbonate und/oder andren Salzen bzw. Alkalimetallen behandelt und aufgeschlossen), Schwefel, Schwefelsäure, Schwefelsalze, Eisensulfat, Eisenchlorid, Eisencarbonat, Kalzium, Kalziumoxid, -hydroid, -carbonat, -nitrat, -phosphat, bestehen.

Bekannte Präparate werden einzeln oder gemischt eingesetzt, um den Nährstoffbedarf der Nutzpflanzen und des Bodens zu verbessern, oder um die Luft-, Wasser- und Nährstoff-Speicherkraft des Bodens zu verbessern. Die bekannten Präparate weisen in der Regel eine spezifische Wirkung auf und es können noch nicht alle Anforderungen an eine optimale Wirksamkeit der Bodenfruchtbarkeit mit pH-Regulierung und optimalem Nährstoffdepot sowie Nährstoff-, Wasser- und Luftspeicherkraft erfüllt werden.

Aufgabe der vorliegenden Erfindung ist es, ein Präparat der einleitend genannten Art derart anzugeben, daß bei einer Vielzahl von Anwendungen eine optimale Wirksamkeit bereitgestellt wird.

Diese Aufgabe wird erfindungsgemäß dadurch gelöst, daß eine Verwendung für mindestens eines der Gebiete pH-Regulierung, Filzbeseitigung oder Verbesserung der Bodenfruchtbarkeit (Nährstoffversorgung, Schutz vor Auswaschung und Fixierung, Luft- und Wasser-Versorgung) vorgesehen ist und daß in der organischen Komponente als Algenmaterial Braunalgen und/oder Rotalgen enthalten sind.

Insbesondere ist vorgesehen, daß eine Verwendung als pH-Regulator (Bodenreaktion, sauer, neutral oder alkalisch), Dünger, oder zur Verbesserung der Bodenfruchtbarkeit, vorgesehen ist und daß in der organischen Komponente Algenmaterial (insbesondere Braunalgen und/oder Rotalgen aller Arten) enthalten ist.

Die obige Komponentenkombination kann zusätzlich mit bekannten und in der Praxis angewandten Düngern gemischt werden, um eine breitere und/oder längere Wirkung zu erzielen.

Die Präparate können als feste und flüssige Mittel zum Spritzen, Sprühen oder als Granulat formuliert werden. Die Präparate können darüber hinaus auch als Paste zum Streichen sowie als feste Formulierung zum Streuen realisiert sein. In Abhängigkeit von der jeweils zu behandelnden Pflanzen- und Bodenart kann die Wirkung durch Zusatz von Sand oder Kalk verbessert werden.

Als Beispiel sind folgende Verbindungen und Salze zu erwähnen:
Als Komponente des Präparates können flüssige und feste natürliche oder synthetische organische oder anorganische Verbindungen und Mischungen, die eine Stärkung der Pflanzen und ein erhöhtes Wachstum und eine verbesserte Gesundheit der Pflanzen und Gesundheit des Bodens durch pH-Regulierung, Luft-, Wasser- und Nährstoffhaushalts hervorrufen und/oder eine Ertragssteigerung oder bessere Qualität hervorrufen, verwendet werden.

Verwendbar sind beispielsweise:
a) Algenmaterialien wie zum Beispiel frische Algen oder Algenteile, Algenmehle aus verschiedenen Arten und verschiedener Herkunft, insbesondere Braunalgen, Laminaria, Ascophylum u.a. sowie Rotalgen in Rohform oder verarbeitet.
b) Algenextrakte und Pasten in allen möglichen Präsentationen wie Blattdünger, Wachstumsförderer, Pflanzenstärkungsmittel Bodendünger und Bodenverbesserer etc.
c) Alginate-, Pektinate-, und andere Polysaccharidesalze wie Na, Ca, Cu, K, Mg, Mn, Fe, NH₄, usw.
d) Aminosäuren einzeln oder in Mischungen, aus tierischer, pflanzlicher oder synthetischer Herkunft.
e) zucker und Polysaccharide wie Melasse oder zuckerhaltige Extrakte und Stoffe.
f) Produkte aus Pflanzenmaterial, Sud, Brei, Extrakte etc.
g) Organische und anorganische Materialien wie Wirtschaftsdünger, Komposte, organische und anorganische Dünger, Spurenelemente, Bodenverbesserer, Strukturverbesserer, Tonmineralien, Sande, Silizium, Kolloidbildner, slow-release Formulierungshilfsstoffe, synthetische organische und anorganische Substanzen sowie Erden.
h) Torf, Humus und Huminsäure aus Braun- und Steinkohle.

Als zweite Komponente können Säuren, Laugen und ihre organischen und anorganischen Salze, Schwefel, Schwefelsäure, schweflige Säure, Phosphor, Phosphorsäure, Phosphorige Säure, Salpetersäure, Salzsäure, Chlor, Kalium, Kalilauge, Kaliumoxide, -hydroxide, Natrium, Natriumoxid, -hydroxid, Natronlauge, Kalzium, Kalziumlauge, Ammoniak, Ammoniumlauge, die eine Düngewirkung und eine Wirkung auf die pH-Werte aufweisen, verwendet werden.

Verwendbar sind beispielsweise:
a) Phosphorsäure H3PO4
aa) Calziumphosphat Ca3 PO4)2
ab) Calziummonophosphat CaHPO4
ac) Calziumdiphosphat Ca(H2P04)2
ad) Trippelkalziumphosphat
af) Kaliumphosphat K3PO4
ag) Monokaliumphosphat KH2PO4
ah) Dikaliumphosphat K2HPO4
ai) Tetrakaliumphosphat K4P2O7
aj) Kaliumpolyphosphat
ak) Natriumphosphat Na3PO4,
al) Mononatriumphosphat NaH2PO4
am) Dinatriumphosphat Na2HPO4
an) Tetranatriumphosphat Na4P2O7
ao) Natriumpolyphosphat
b) Phosphorige Säure H3PO3
ba) Phosphorige Säure und die Salzen (siehe Patent-Nr. EP 1 298 998 B1)
c) Schwefel S
ca) Schwefelsäure H2SO4
cb) Sulfate CaSO4, MgSO4, K2SO4, NH4SO4, CuSO4, ZnSO4, FeSO4 (II und III-wertig)
cd) Sulfite, Sulfide und Thiosulfate
e) Salpetersäure HNO3
ea) Kaliumnitrat KNO3
eb) Natriumnitrat NaN03
ec) Kalziumnitrat CaNO3)2
ed) Amoniumnitrat NH4NO3
ef) Amoniumsulfat NH4) 2SO4
eg) Amoniumcarbonat NH4) 2CO3
ef) Amoniumphosphat NH4) 3PO4
ei) Monoamoniumphosphat NH4H2PO4
ej) Diamoniumphosphat NH4) 2HPO4

f) Magnesiumoxid MgO
fa) Magnesiumhydroxid Mg(OH)2
fb) Magnesiumsulfat MgSO4
fc) Magnesiumnitrat MgNO3)2
fd) Magnesiumcarbonat MgC03
ff) Magnesiumphosphat MgHPO4

g) Kalziumoxid CaO
ga) Kalziumhydroxid Ca(OH)2
gb) Kalzimcarbonat CaCO3
gc) Kalziumnitrat CaNO3
gd) Kalziumsulfat CaS04
ge) Kalziumphosphat Ca) 3PO4)2, CaHPO4, Ca2H2PO4

Die Wirksamkeit ergibt sich aus den nachfolgend erläuterten Versuchen.

In den beigefügten Tabellen sind charakteristische Daten zu den nachfolgenden Beispielen zusammengefaßt.

Es zeigen im einzelnen:
- Tabelle 1: Ergebnisse der pH-Senkung mit Golf-Algin A auf einem Putting Green im Zeitraum von 2000 bis 2004. (Filzprobleme)
- Tabelle 2: Ergebnisse der pH-Senkung mit Golf-Algin A auf einem Green 11 im Zeitraum von 2000 bis 2004.
- Tabelle 3:: Ergebnisse der pH-Erhöhung mit Golf-Algin S auf einem Green Nr. 1 im Zeitraum von 2000 bis 2004. (Filzprobleme)
- Tabelle 4:: Ergebnisse der pH-Optimierung mit Golf-Algin N auf einem Green Nr. 9 im Zeitraum von 2000 bis 2004. (Wachstumsprobleme, Filz, Nährstoff)
- Tabelle 5:: Ergebnisse der pH-Optimierung mit Golf-Algin N auf einem Green Nr. 18 im Zeitraum von 2000 bis 2004. (Wachstumsprobleme, Luftmangel)

### Wirkung der ersten Komponenten

Die Wirkung der Algenmehle (aufgeschlossene und nicht aufgeschlossene) mit und ohne Aminosäuren, ist auf dem Boden zur Verbesserung der Luft-, Wasser- und Nährstoff-Speicherkraft und zur positiven Wachstums förderung der Pflanzen bekannt.

### Die Wirkung der zweiten Komponenten

Die Wirkung von Säuren und Salzen von Phosphor, Stickstoff, Kalium, Kalzium, Magnesium, Schwefel, Eisen, Mangan und Spurennährelemente auf dem Boden und für Pflanzen als Dünger und zur pH- Verbesserung ist ebenfalls bekannt.

### Wirkung der Kombinationsprodukte: Tabelle 6

Salze, Säuren und/oder Laugen von Phosphor, Kalium, Stickstoff, Magnesium, Eisen, Schwefel bilden mit dem Wasser ein unansehnliches, feuchtes, hygroskopisches und Ausfällungen der Elemente und Stoffe 920012 enthaltendes Gemisch. Die Mischungen aus oben genannten Verbindungen 1:1-Teile (aus 920012) und (920013 + 920014) mit aufgeschlossenem und nicht aufgeschlossenem Algenmehl 920015 und 920016 sind streufähig und wirksamer als Düngemittel (NPK-Volldünger) und als Algenmehl aufgeschlossen oder nicht aufgeschlossen. Die Blätter der Gräser sind bei 920015 und 920016 dicker, kräftiger, dunkelgrüner und nachhaltiger im Wachstum als alle anderen Varianten. Das entscheidende ist dabei, daß die pH-Werte nur durch 920015 und 920016 gesenkt worden sind, bei mäßigem Wachstum der Gräser.

### Aufwandmenge:

Die oben genannten Produkte mit Ausnahme von Algenmehl (aufgeschlossen oder nicht aufgeschlossen) haben einen Gehalt an Phosphor (P2O5)) von 2 bis 5 %, Stickstoff (N) von 3,4 bis 10 % Kalium (K20) von 6 bis 10 % und Schwefel 5 bis 8 %.

### Resultate:

Beispiel 1 : pH-Wert Senkung und Filz- Beseitigung auf dem Putting Green und Green Nr. 14. Die Resultate ergeben sich aus Tabelle 1 und 2
Beispiel 2 : pH-Wert Erhöhung und Filz-Beseitigung auf dem Green 3. Die Resultate ergeben sich aus der Tabelle 3.
Beispiel 3 : pH-Wert optimal und Luftzufuhr auf Green Nr. 9 und Nr. 18. Die Resultate ergeben sich aus der Tabelle 4 und 5.

Die Erfindung zeigt zusätzlich zu pH-Regulierung, Beseitigung von Filz, Erhöhung der Luft-, Wasser- und Nährstoff-Speicherkraft eine gute und langsame Ernährung der Pflanzen über die Vegetationszeit, während das Wachstum durch NPK-Dünger wie eine Luftblase sehr schnell in sich zusammenfällt. Sehr geiles Wachstum und anschließender Mangel. Die Versorgung der Pflanzen durch den Schutzmechanismus der Alginat-Speicher ist für Nährstoff optimal. Durch bessere, gleichmäßige und behutsame Ernährung der Pflanzen bleiben die Pflanzen gesünder.

Der pH-Wert des Bodens ist wichtig für das Pflanzenwachstum und die Bodenfruchtbarkeit und wird gezielt eingestellt. Als schädliche Stoffe für die Umwelt, den Boden, das Bodenleben und die Pflanzen sind die pH-Wert Senkungen allein mit den oben genannten Säuren oder Laugen und deren Salze allgemein bekannt. Die Unschädlichkeit der Kombination aus den oben genannten Stoffen mit aufgeschlossenem Algenmehl ist bislang nicht bekannt.

Die Produkte können als Granulate gestreut oder als flüssige Mittel zum Spritzen, Sprühen, Gießen formuliert werden. Sie können auch mit Hilfsmitteln formuliert werden, die einen slow-release Effekt bewirken.

Im Hinblick auf die ersten Komponenten des Präparates erwiesen sich zum Spritzen, Gießen oder Tauchen insbesondere Mischungen aus Algen in flüssiger Form mit Aminosäuren als vorteilhaft. Die Verwendung von Melasse sowie Spurennährelementen ist ebenfalls vorteilhaft.

Im Hinblick auf eine Streufähigkeit der Präparate erwiesen sich insbesondere als vorteilhaft Mischungen aus granulierten Algenprodukten. Darüber hinaus ist die Verwendung von Tonmineralien, Düngern, beziehungsweise von Spurennährelementen oder organischen Materialien erfolgsversprechend. Bei der Verwendung des organischen Materials ist insbesondere an Humus, Huminstoffe, Komposte sowie Rindenmulch gedacht.

Bei der Verwendung von Salzen als zweite Komponente des Präparates kann über die jeweilige chemische Zusammensetzung des Salzes die Löslichkeit sowie die Wirkungsschnelligkeit beeinflußt werden. Eine langfristige Wirkung wird durch Zusatz von Natrium, Kalium, Ammonium, Kalium oder deren Säuren und Laugen unterstützt. Spurennährelemente Kupfer, zink, Mangan, Molybdän usw. sind zur Sicherung der Ernährung der Pflanzen vorteilhaft.

Im Hinblick auf die Zusammensetzung der Präparate soll noch einmal darauf hingewiesen werden, daß insbesondere ein Zusatz von Polysacchariden in aufgeschlossenen Algen zu einer gezielten, sanften pH-Regulierung, Schutz der Nährstoffe vor Auswaschung und Fixierung sowie kontinuierlicher Dosierung der Nährstoffe an die Pflanzen, Verbesserung der Luft- und Wasserhaushalt, Gesundheit der Pflanzen beiträgt und dem Boden Fruchtbarkeit verleiht. Darüber hinaus sind die Säuren, Laugen und Salze nur in dieser Form formuliert und granuliert für die Pflanzen verträglich mit Algen wirksam.

Die Verwendung von Algenmaterialien entfaltet besondere Bedeutung im Zusammenhang mit einer festen Formulierung der Präparate. Der Verwendung von Algenmaterialien erweist sich gegenüber einer Verwendung von technischen Alginaten als vorteilhaft, da andere Herstellungsverfahren zur Anwendung kommen, die bei der Herstellung von Algenprodukten weniger chemisch aggressiv als bei der Herstellung von Alginaten sind. Die natürlichen Produkteigenschaften werden hierdurch weniger beeinträchtigt.

**Tabelle 1**

| Ergebnisse der pH-Senkung auf einem Putting Green im Zeitraum von 2000 bis 2004 auf einem Golf-Platz mit Wachstums- und Filzproblemen | | | | | | |
|---|---|---|---|---|---|---|
| Ergebnisse: 200 g/m2 Golf-Algin A (pH-Wert -Senker) | | | | | | |
| | | | | | | |
| Bodentiefe | pH-Wert -Ziel | pH-Wert 2000 | pH-Wert 2002 | pH-Wert 2004 | Filzbildung 2000 | Filzbildung 2004 |
| 0 - 2 cm | 5,00 | 6,54 | 6,00 | 5,40 | Stark | Abgebaut |
| 2 - 6 cm | 5,00 | 6,50 | 5,80 | 5,35 | Stark | Abgebaut |
| 6 - 10 cm | 5,00 | 6,40 | 5,50 | 5,20 | Keine | |
| 10 - 15 cm | 500 | 6,00 | 5,40 | 5,00 | keine | |

**Tabelle 2**

| Ergebnisse der pH-Senkung auf Green Nr. 14 im Zeitraum von 2000 bis 2004 auf einem Golf-Platz mit Wachstums- und Filzproblemen | | | | | | |
|---|---|---|---|---|---|---|
| Ergebnisse: 200 g/m2 Golf-Algin A (pH-Wert -Senker) | | | | | | |
| | | | | | | |
| Bodentiefe | pH-Wert -Ziel | pH-Wert 2000 | pH-Wert 2002 | pH-Wert 2004 | Filzbildung 2000 | Filzbildung 2004 |
| 0 - 2 cm | 5,00 | 6,40 | 5,80 | 4,90 | Stark | Abgebaut |
| 2 - 6 cm | 5,00 | 6,60 | 6,00 | 5,30 | Stark | Abgebaut |
| 6 - 10 cm | 5,00 | 6,80 | 6,10 | 5,40 | Keine | |
| 10 - 15 cm | 5,00 | 6,80 | 6,05 | 5,40 | keine | |
| 15 - 20 cm | 5,00 | 7,00 | 6,30 | 5,50 | | |

**Tabelle 3**

| Ergebnisse der pH-Erhöhung auf Green Nr. 1 im Zeitraum von 2000 bis 2004 auf einem Golf-Platz mit Wachstums- und Filzproblemen | | | | | | |
|---|---|---|---|---|---|---|
| Ergebnisse: 200 g/m2 Golf-Algin S (pH-Wert -erhöher) | | | | | | |
| | | | | | | |
| Bodentiefe | pH-Wert -Ziel | pH-Wert 2000 | pH-Wert 2002 | pH-Wert 2004 | Filzbildung 2000 | Filzbildung 2004 |
| 0 - 2 cm | 5,00 | | 4,90 | 5,20 | Stark | Abgebaut |
| 2 - 6 cm | 5,00 | | 3,80 | 5,10 | Stark | Abgebaut |
| 6 - 10 cm | 5,00 | | 3,70 | 5,00 | Keine | |
| 10 - 15 cm | 5,00 | | 3,90 | 4,80 | keine | |
| 15 - 20 cm | 5,00 | | 4,29 | 5,00 | | |

**Tabelle 4**

| Ergebnisse der pH-Wert-Optimierung auf Green Nr. 9 im Zeitraum von 2002 bis 2004 auf dem Golf-Platz mit Wachstums- und Filzproblemen | | | | | | |
|---|---|---|---|---|---|---|
| Ergebnisse: 200 g/m2 Golf-Algin N (pH-Wert -erhöher) | | | | | | |
| | | | | | | |
| Bodentiefe | pH-Wert -Ziel | pH-Wert 2000 | pH-Wert 2002 | pH-Wert 2004 | Filzbildung 2000 | Filzbildung 2004 |
| 0 - 2 cm | 5,00 | | 6,30 | 5,50 | Stark | Abgebaut |
| 2 - 6 cm | 5,00 | | 3,51 | 4,90 | Stark | Abgebaut |
| 6 - 10 cm | 5,00 | | 3,40 | 5,00 | Keine | |
| 10 - 15 cm | 5,00 | | 3,60 | 4,80 | keine | |
| 15 - 20 cm | 5,00 | | 3,80 | 4,50 | | |

**Tabelle 5**

| Ergebnisse der pH-Wert-Optimierung auf Green Nr. 18 im Zeitraum von 2002 bis 2004 auf einem Golf-Platz mit Wachstumsproblemen | | | | | | |
|---|---|---|---|---|---|---|
| Ergebnisse: 200 g/m2 Golf-Algin N (pH-Wert -erhöher) | | | | | | |
| | | | | | | |
| Bodentiefe | pH-Wert -Ziel | pH-Wert 2000 | pH-Wert 2002 | pH-Wert 2004 | Filzbildung 2000 | Filzbildung 2004 |
| 0 - 2 cm | 7,50 | 7,01 | 7,00 | 7,10 | Gute Wurzel | Gute Wurzel |
| 2 - 6 cm | 7,50 | 7,20 | 7,20 | 7,20 | ++ | +++ |
| 6 - 10 cm | 7,50 | 7,15 | 7,20 | 7,20 | + | ++ |
| 10 - 15 cm | 7,50 | 7,20 | 7,30 | 7,30 | + | ++ |
| 15 - 20 cm | 7,50 | 7,30 | 7,50 | 7,50 | + | + |

**Tabelle 6**

| Ergebnisse der Kombinationsprodukte im Vergleich zu Mischungsprodukte Golf-Algin A, N, S, Food, A und S | | | | | | |
|---|---|---|---|---|---|---|
| Ergebnisse: 200 g/m2 / Rasenfläche | | | | | | |
| Versuch | | Tralau Datum | | Bonitur | | |
| Anwendung 16. Mai. 1992 10.Juni 1992 | | | 25.Mai 1992 | | | |
| | | | | | | |

| Mittel | Dosis g/m2 | Pflanzenwachstum | Schäden | Pflanzenwachstum | Schäden | pH-Wert |
|---|---|---|---|---|---|---|
| NPK-Dünger 920010 | 100 g/m2 | Zu weich Blätter grün | 1 | Gelb/grün zu geiles Wachstum | 1 | 6,0 |
| Unbehandelt 920011 | 0 | normal | 1 | Schwaches Wachstum | 1 | 6,0 |
| Mischungen der Nährstoffe 920012 | 100 g/m2 | negativ | 3 | Keine Besserung | 2 | 6,2 |
| Algenmehl aufgeschlossen 920013 | 100 g/m2 | Kein besseres Wachstum | 1 | Kein besseres Wachstum | 1 | 6,0 |
| Algenmehl nicht aufgesch. 920014 | 100 g/m2 | Leichte Wachstums-Verbesserung | 1 | Leichte Wachstums-Verbesserung | 1 | 6,2 |
| Algenmehl aufgeschlossen+ nicht aufgeschlossen +Nährstoff-Mischungen 920015 | 100 g/m2 | grün, breite Blätter, gutes Wachstum | 1 | Dunkel grün, breite Blätter, kräftiges Wachstum | 1 | 5,5 |
| Algenmehl aufgeschlossen+ nicht aufgeschlossen +Nährstoff-Mischungen 920016 | 200 g/m2 | Dunkel grün, breite Blätter, kräftiges Wachstum | 1 | Dunkel grün, breite Blätter, kräftiges, nachhaltiges Wachstum | 1 | 5,0 |

## Patentansprüche

1. Präparat zur pH-Wert-Regulierung des Bodens im Kombination mit einer Erhöhung der Bodenfruchtbarkeit, das mindestens eine erste Komponente und eine zur ersten Komponente unterschiedliche zweite Komponente enthält und bei dem die zweite Komponente als eine Verbindung aus der Gruppe von Phosphor, Schwefel, Kalium, Stickstoff, Kalzium, Magnesium in Säure, Lauge oder Salze realisiert ist, sowie bei dem die erste Komponente organische Verbindungen enthält, die aus aufgeschlossenem oder nicht aufgeschlossenem Algenmehl, Algenextrakten oder Pasten bestehen, **dadurch gekennzeichnet, daß** eine Verwendung für mindestens eines der Gebiete pH-Regulierung, Filzbeseitigung oder Verbesserung der Bodenfruchtbarkeit (Nährstoffversorgung, Schutz vor Auswaschung und Fixierung, Luft- und Wasser-Versorgung) vorgesehen ist und daß in der organischen Komponente als Algenmaterial Braunalgen und/oder Rotalgen enthalten sind.

2. Präparat nach Anspruch 1, **dadurch gekennzeichnet, daß** die erste Komponente anorganische Komponenten enthält.

3. Präparat nach Anspruch 1 oder 2, **dadurch gekennzeichnet, daß** die erste Komponente ein Produkt aus Landpflanzen enthält.

4. Präparat nach Anspruch 3, **dadurch gekennzeichnet, daß** ein Produkt aus der Gruppe der Extrakte, Aufschlüsse, Brei, Säfte oder Mehle enthalten ist.

5. Präparat nach Anspruch 1 bis 4, **dadurch gekennzeichnet, daß** die erste Komponente mindestens ein Polysaccharid enthält.

6. Präparat nach Anspruch 5, **dadurch gekennzeichnet, daß** das Polysaccharid aus der Gruppe Melasse, Pektine, Zucker sowie Salze realisiert ist.

7. Präparat nach Anspruch 1 bis 6, **dadurch gekennzeichnet, daß** die erste Komponente einen Humus enthält.

8. Präparat nach Anspruch 7, **dadurch gekennzeichnet, daß** der Humus als ein Produkt aus der Gruppe der Huminstoffe, Komposte, Rindenmulche sowie Holzschnitzel realisiert ist.

9. Präparat nach Anspruch 1 bis 8, **dadurch gekennzeichnet, daß** die erste Komponente synthetische organische Verbindungen enthält.

10. Präparat nach Anspruch 1 bis 9, **dadurch gekennzeichnet, daß** die erste Komponente Bestandteile aus Wasserpflanzen enthält.

11. Präparat nach Anspruch 1 bis 10, **dadurch gekennzeichnet, daß** die erste Komponente Bestandteile aus Meereswasserpflanzen enthält.

12. Präparat nach Anspruch 1 bis 11, **dadurch gekennzeichnet, daß** die erste Komponente Bestandteile aus Süßwasserpflanzen enthält.

13. Präparat nach Anspruch 1, **dadurch gekennzeichnet, daß** die erste Komponente aus der Gruppe der Algen, Extrakte, Breie, Mehle, Aufschlüsse und Alginate enthält.

14. Präparat nach Anspruch 1, **dadurch gekennzeichnet, daß** die erste Komponente synthetische Verbindungen enthält.

15. Präparat nach Anspruch 1 bis 14, **dadurch gekennzeichnet, daß** die erste Komponente ein Kolloid enthält.

16. Präparat nach Anspruch 1 bis 15, **dadurch gekennzeichnet, daß** die erste Komponente ein Silikatprodukt enthält.

17. Präparat nach Anspruch 1 bis 16, **dadurch gekennzeichnet, daß** die erste Komponente Erden enthält.

18. Präparat nach Anspruch 1 bis 17, **dadurch gekennzeichnet, daß** die erste Komponente Tonmineral enthalten.

19. Präparat nach Anspruch 1 bis 18, **dadurch gekennzeichnet, daß** die erste Komponente Sande enthält.

20. Präparat nach Anspruch 1 bis 19, **dadurch gekennzeichnet, daß** die erste Komponente einen Dünger enthält.

21. Präparat nach Anspruch 1 bis 20, **dadurch gekennzeichnet, daß** die erste Komponente Spurennährelemente enthält.

22. Präparat nach einem der Ansprüche 1 bis 21, **dadurch gekennzeichnet, daß** eine Verwendung zur Senkung des pH-Wertes vorgesehen ist.

23. Präparat nach einem der Ansprüche 1 bis 21, **dadurch gekennzeichnet, daß** eine Verwendung zur Erhöhung des pH-Wertes vorgesehen ist.

24. Präparat nach einem der Ansprüche 1 bis 21, **dadurch gekennzeichnet, daß** eine Verwendung zur Optimierung des pH-Wertes vorgesehen ist.

25. Präparat nach einem der Ansprüche 1 bis 21, **dadurch gekennzeichnet, daß** eine Verwendung zur Verbesserung des Lufthaushaltes des Bodens vorgesehen ist.

26. Präparat nach einem der Ansprüche 1 bis 21, **dadurch gekennzeichnet, daß** eine Verwendung zur Verbesserung des Wasserhaushaltes des Bodens vorgesehen ist.

27. Präparat nach einem der Ansprüche 1 bis 26, **dadurch gekennzeichnet, daß** eine Verwendung zu einem Schutz vor Auswaschungen von Bodeninhaltsstoffen vorgesehen ist.

28. Präparat nach einem der Ansprüche 1 bis 21, **dadurch gekennzeichnet, daß** eine Verwendung zur Bereitstellung einer Nährstoffdeponiewirkung im Boden vorgesehen ist.

29. Präparat nach einem der Ansprüche 1 bis 21, **dadurch gekennzeichnet, daß** eine Verwendung zur Beseitigung von Filz unter einer Rasenfläche vorgesehen ist.
